# EUROPEAN PATENT APPLICATION

(11) **EP 4 431 479 A1**
(43) Date of publication of application: **18.09.2024**
(21) Application number: 23162016.2
(22) Date of filing: 15.03.2023
(51) Int. Cl.: C04B 26/14, C04B 26/16, C04B 26/18, C04B 111/54, C04B 111/10

(54) **SYNTHETIC STONE AND METHODS OF FORMING SYNTHETIC STONE**

(71) Applicant: Sibelco Italia S.p.A., 20124 Milan (IT); ANKERPOORT N.V., 6223 EP Maastricht (NL)
(72) Inventor: FERRARI, Francesco, 41053 Maranello (IT)
(74) Representative: Forresters IP LLP

(57) **Abstract**

The present invention relates to synthetic stone. The present invention also relates to a method of forming synthetic stone.

## Description

### FIELD OF THE INVENTION

The present invention relates to synthetic stone. The present invention also relates to methods of forming synthetic stone.

### BACKGROUND OF THE INVENTION

Cristobalite is a mineral obtained by calcination of pure silica sand at a temperature of approximately 1550°C; for example, at a temperature of from 1300°C to 1700°C.

At room temperature, silica sand is mainly composed of a mineralogical phase called α-quartz. When the α-quartz is heated to approximately 1550°C, the crystalline lattice of the α-quartz undergoes a phase change. Upon heating, α-quartz initially undergoes a phase change to form β-quartz. Upon further heating, β-quartz then forms tridymite and then, at higher temperatures (typically from 1300°C to 1700°C, at atmospheric pressure), cristobalite is formed.

Cristobalite is chemically stable and mechanically strong. Commercial forms of cristobalite also have a high whiteness. Owing to its ease of manufacture, cristobalite is used in many applications. For example, cristobalite is used in engineering stone (e.g. work surfaces) and in paint.

In the engineering stone market (sometimes referred to as EGS), one of the biggest markets for cristobalite is in the production of kitchen countertops (for example in the form of synthetic stone). The countertops are composed of a mineral filler and resin. The countertops typically comprise the mineral filler at a high percentage (up to 92 weight %), whilst one or more resins (optionally: 2K epoxy resins, for example Fugante^{™} Epoxy 2k; or, polyester resins, for example POLARIS polyester resin (produced by Ashland^{™})) are present in lower percentages. Cristobalite, quartz, or, cristobalite and quartz, are often incorporated in the countertops as the mineral filler.

Typically, a countertop (composed of a mineral filler and resin) will require cutting prior to installation. A countertop is typically cut in a dry way with simple abrasion tools. This method of cutting the countertop generates dust that is composed of a mixture of the resin and mineral filler. The mineral dust may contain cristobalite, quartz, or, cristobalite and quartz. Cristobalite and quartz dust can lead to work related cell silicosis through inhalation.

Cristobalite and quartz have been investigated for carcinogenic properties when the minerals are dispersed in the air and therefore inhaled. The most dangerous particles are particles with a diameter below 10 µm and particles freshly generated from a high energy cutting process.

Often, synthetic stone for the EGS market is formed to be white or off white. Sometimes there is a desire to include black and/or grey material in a synthetic stone. For example, it is sometimes desirable to include black and/or grey veins in an otherwise white or off white synthetic stone.

There is a need for beneficial synthetic stone. In particular, there is a need for a synthetic stone containing no cristobalite, quartz, or, cristobalite and quartz; or, a synthetic stone where cristobalite, quartz, or, cristobalite and quartz is reduced to below 1% by weight.

### SUMMARY OF THE INVENTION

The present invention discloses synthetic stone with no or little cristobalite, quartz, or, cristobalite and quartz.

The present invention relates to the finding that nepheline syenite and/or nepheline syenite tailings, that are crystalline silica free or substantially crystalline silica free (i.e. include less than 1 weight % silica), can be used in the production of synthetic stone. Such synthetic stone has chemical and mechanical properties similar to synthetic stone formed with quartz and/or cristobalite, whilst being free from crystalline silica or substantially crystalline silica free (i.e. include less than 1 weight % crystalline silica). The inclusion of nepheline syenite and/or nepheline syenite tailings in synthetic stone also permits the formation of synthetic stone with a range of colours that go from black to grey to off-white, making them suitable for synthetic stone production.

The present invention is as set out in the following clauses:
1. A synthetic stone comprising:
a. nepheline syenite, and
   a binder; or,
b. nepheline syenite tailings, and
   a binder; or,
c. nepheline syenite and nepheline syenite tailings, and
   a binder.
2. The synthetic stone of clause 1, wherein the nepheline syenite has the following chemical composition:

| | **From/weight %** | **To/weight %** |
|---|---|---|
| **SiO₂** | 49.8 | 73.5 |
| **Al₂O₃** | 19 | 25 |
| **Fe₂O₃** | 0 | 0.4 |
| **TiO₂** | 0 | 0.5 |
| **CaO** | 0 | 2.5 |
| **MgO** | 0 | 0.5 |
| **Na₂O** | 5 | 11 |
| **K₂O** | 2.5 | 10 |
| **BaO** | 0 | 0.3 |

based on the total weight of the nepheline syenite.
3. The synthetic stone of clause 1 or clause 2, wherein the nepheline syenite comprises:
Al₂O₃ + Na₂O + K₂O from 32 weight % to 42.5 weight %; and/or,
Al₂O₃ + Na₂O + K₂O + Fe₂O₃ + TiO₂ from 32 weight % to 42 weight %; and/or,
SiO₂/Al₂O₃ from 2.2 to 3.4; and/or,
SiO₂ + Al₂O₃ + Na₂O from 88 to 96 weight %; and/or,
SiO₂ + Al₂O₃ + Na₂O + K₂O from 97 to 99 weight %.
4. The synthetic stone of any one of clauses 1 to 3, wherein the nepheline syenite has the following chemical composition:

| | **From/weight %** | **To/weight %** |
|---|---|---|
| **SiO₂** | 50.85 | 65.29 |
| **Al₂O₃** | 22 | 25 |
| **Fe₂O₃** | 0.01 | 0.2 |
| **TiO₂** | 0 | 0.15 |
| **CaO** | 0.2 | 2 |
| **MgO** | 0 | 0.5 |
| **Na₂O** | 7.5 | 11 |
| **K₂O** | 5 | 10 |
| **BaO** | 0 | 0.3 |

based on the total weight of the nepheline syenite.
5. The synthetic stone of any one of clauses 1 to 4, wherein the nepheline syenite tailings have the following chemical composition:

| | **From/weight %** | **To/weight %** |
|---|---|---|
| **SiO₂** | 31.9 | 70.6 |
| **Al₂O₃** | 15 | 23 |
| **Fe₂O₃** | 0.4 | 13 |
| **TiO₂** | 0 | 3.1 |
| **CaO** | 4.5 | 8.0 |
| **MgO** | 0 | 4.5 |
| **Na₂O** | 4.5 | 7.5 |
| **K₂O** | 5 | 8.5 |
| **BaO** | 0 | 0.5 |

based on the total weight of the nepheline syenite tailings.
6. The synthetic stone of any one of clauses 1 to 5, wherein the nepheline syenite tailings comprise:
Al₂O₃ + Na₂O + K₂O from 27 weight % to 36 weight %;
Al₂O₃ + Na₂O + K₂O + Fe₂O₃ + TiO₂ from 36 weight % to 41 weight %; and/or,
SiO₂/Al₂O₃ from 2.3 to 2.8; and/or,
SiO₂ + Al₂O₃ + Na₂O from 69 to 83 weight %; and/or,
SiO₂ + Al₂O₃ + Na₂O + K₂O from 75 to 91 weight %.
7. The synthetic stone of any one of clauses 1 to 6, wherein the nepheline syenite tailings have the following chemical composition:

| | **From/weight %** | **To/weight %** |
|---|---|---|
| **SiO₂** | 33.9 | 57.4 |
| **Al₂O₃** | 15 | 22 |
| **Fe₂O₃** | 8 | 13 |
| **TiO₂** | 2 | 3.1 |
| **CaO** | 5 | 7.5 |
| **MgO** | 3 | 4.5 |
| **Na₂O** | 4.5 | 7.5 |
| **K₂O** | 5 | 8 |
| **BaO** | 0.1 | 0.5 |

based on the total weight of the nepheline syenite tailings.
8. The synthetic stone of any one of clauses 1 to 7, wherein the synthetic stone comprises:
from 1 to 90 weight %, or from 1 to 70 weight %, or from 1 to 40 weight %, or from 1 to 30 weight%, nepheline syenite, nepheline syenite tailings, or nepheline syenite and nepheline syenite tailings; or,
from 2 to 90 weight %, or from 2 to 70 weight %, or from 2 to 40 weight %, or from 2 to 30 weight%, nepheline syenite, nepheline syenite tailings, or nepheline syenite and nepheline syenite tailings; or,
from 5 to 90 weight %, or from 5 to 70 weight %, or from 5 to 40 weight %, or from 5 to 30 weight%, nepheline syenite, nepheline syenite tailings, or nepheline syenite and nepheline syenite tailings.
9. The synthetic stone of any one of clauses 1 to 8, wherein the nepheline syenite, nepheline syenite tailings, or nepheline syenite and nepheline syenite tailings, are in the form of granules; optionally, wherein the granules:
have a particle size in a range of from 1.0 to 0.063 mm (grain particles), or
have a particle size of lower than 63 micrometres (micronized powder); and/or,
have a particle size D90 less than 50 micrometres, or less than 40 micrometres, or from 10 to 40 micrometres.
10. The synthetic stone of any one of clauses 1 to 9, wherein the binder comprises, or consists of, a resin; optionally, wherein the synthetic stone comprises from 6 to 20 weight % resin.
11. The synthetic stone of clause 10, wherein the resin is an epoxy resin, a polyester resin or a polyurethane resin; optionally, wherein the resin is a 2K epoxy resin.
12. The synthetic stone of any one of clauses 1 to 11, wherein the ratio of nepheline syenite to nepheline syenite tailings is (nepheline syenite:nepheline syenite tailings):
from 1:100 to 100:1; or,
from 1:10 to 10:1; or,
from 1:5 to 5:1; or,
from 1:2 to 2:1; or,
1:1.
13. The synthetic stone of any one of clauses 1 to 12, wherein the synthetic stone further comprises a pigment, a silane, a catalyst, an accelerator, or a mixture of any two, three or four of these components
14. The synthetic stone of any one of clauses 1 to 13, wherein the synthetic stone comprises:
less than 1 weight % crystalline SiO₂, or less than 0.5 weight % crystalline SiO₂, or less than 0.1 weight % crystalline SiO₂, or is free of crystalline SiO₂; and/or,
cristobalite, quartz, or cristobalite and quartz, at less than 1 weight %, or less than 0.5 weight %, or less than 0.1 weight %, or less than 0.01 weight %.
15. The synthetic stone of any one of clauses 1 to 14, wherein the synthetic stone comprises trace amounts (less than 1 weight %, or less than 0.5 weight %, or less than 0.01 weight %) of wollastonite, diopside, calcium magnesium silicate, mica and/or titanite.
16. The synthetic stone of any one of clauses 1 to 15, wherein the synthetic stone has the CIELAB colorimetric parameters:
from 45 to 65 (L); from +0.1 to +2.2 (a); from +4.5 to +9.5 (b); or,
from 29 to 44 (L); from -0.1 to +2 (a); from +0.01 to +2.5 (b);
optionally, wherein the CIELAB colorimetric properties are measured on a HunterLab^{™} Miniscan XE Plus.
17. A paint composition; or, an ink composition; or, a filtration medium; or, a ceramic composition; or, a dental composition; or, a biomedical composition; or, an implant material; or, a fuel cell; or a nuclear waste immobilization composition; comprising the synthetic stone of any one of clauses 1 to 16.
18. A method of forming a synthetic stone, optionally as in any one of clauses 1 to 16, comprising the following steps:
providing nepheline syenite, nepheline syenite tailings, or nepheline syenite and nepheline syenite tailings,
mixing the nepheline syenite, nepheline syenite tailings, or nepheline syenite and nepheline syenite tailings with a binder, and,
permitting the mixture to harden to form a synthetic stone.
19. The method of clause 18, wherein the method further comprises:
during the mixing step, adding a pigment to obtain a synthetic stone of a desired colour; and/or,
during the mixing step, adding one or more components selected from the list consisting of a pigment, a silane, a catalyst, an accelerator, or a mixture of any two, three or four of these components.
20. The method of clause 18 or clause 19, wherein:
the nepheline syenite, nepheline syenite tailings, or nepheline syenite and nepheline syenite tailings are according to any one of clauses 2 to 9, or 12; and/or,
the binder is according to any one of clauses 10 or 11.
21. A synthetic stone obtained by, or obtainable by, the method of any one of clauses 18 to 20.

### BRIEF DESCRIPTION OF THE FIGURES

Embodiments of the invention are described below with reference to the accompanying drawings. The accompanying drawings illustrate various embodiments of systems, methods, and embodiments of various other aspects of the disclosure. Any person with ordinary skills in the art will appreciate that the illustrated element boundaries (e.g. boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.
Figure 1 includes four photographs showing a visual comparison of four synthetic stone samples (A, B, C and D) formed with nepheline syenite and binder.
Figure 2 is a photograph showing one sample (E) formed with nepheline syenite tailings and binder.

### DETAILED DESCRIPTION OF THE INVENTION

Some embodiments of this disclosure, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any products and methods similar or equivalent to those described herein can be used in the practice or testing of embodiments of the present disclosure, the preferred products and methods are now described.

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Some of the terms used to describe the present invention are set out below:
"Alkali Feldspar" refers to feldspars rich in sodium or potassium, including but not limited to albite, microcline, orthoclase and sanidine.

"Crystalline silica free" refers to a composition of matter which contains less than 1 weight % crystalline silica. The standard method of measuring crystalline silica content in a composition of matter is X-Ray Diffraction ("XRD"). Depending on the measuring equipment used, XRD can be accurate to approximately 1 weight % of a crystal phase. Therefore, a "crystalline silica free" composition includes less than 1 weight % crystalline silica. Some XRD measurement apparatus can be accurate to 0.1 weight % so it is possible to measure that a composition is free of crystalline silica with this level of accuracy.

"Feldspar" refers to a mineral group. The feldspar mineral group is one of the most important groups of rock-forming minerals. Feldspars are tectosilicates in which each SiO₄ tetrahedron shares all four oxygens with adjacent tetrahedra. To allow cations such as Na⁺, K⁺ and Ca²⁺ to enter the lattice, and maintain the electrical balance, there is substitution of some Al³⁺ in place for Si⁴⁺. The composition of most feldspars can be represented on a ternary diagram with KAlSi₃O₈ (potassium feldspar, Or), NaAlSi₃O₈ (albite, Ab) and CaAl₂Si₂O₈ (anorthite, An) as end-members. There are two principal groups of feldspars: The alkali feldspars with compositions between Or and Ab, and the plagioclase feldspars with compositions between Ab and An. Alkali feldspars contain less than 5-10% by weight of the An molecule in their structure. At high temperatures there is complete solid solution between the K and Na end members, but at lower temperatures the solid solution is more limited, and in feldspars which cool slowly (e.g. those in plutonic rocks) unmixing occurs, with the development of perthitic intergrowths.

"Nepheline syenite" refers to a coarse grained plutonic igneous rock composed mainly of nepheline with minor amounts of mafic minerals like alkali amphibole, alkali pyroxene, mica and alkali feldspar. Nepheline syenite is crystalline silica free, or substantially free from crystalline silica (i.e. includes less than 1 weight % crystalline silica). The only other minerals that can be considered crystalline silica free are carbonates, such as marbles. Nepheline syenite has a comparable chemical resistance and hardness to quartz. Nepheline syenite (raw rocks) can be processed in a chemical-free, dry process with optional magnetic separation and grain size reduction to produce a finished (refined) nepheline syenite product and nepheline syenite tailings. Such processing includes the following main steps:
- Crushing raw rocks of nepheline syenite
- Drying the crushed material
- Fine crushing the dried and crushed material
- Optionally, magnetic separation
- Control screening for main product (refined nepheline syenite) and side products (nepheline syenite tailings)
- Fine dry grinding for finer products

If the iron content is low in the raw rocks of nepheline syenite, the magnetic separation is optional. In that case, nepheline syenite tailings are produced, whilst no "nepheline black mix" is produced. To form "nepheline black mix" as one of the nepheline syenite tailings streams, the starting raw rocks of nepheline syenite contain Fe-silicate minerals (such as pyroxene and/or amphibole).

Refined nepheline syenite formed by this process has the following chemical composition:

| | **From/weight %** | **To/weight %** |
|---|---|---|
| **SiO₂** | 49.8 | 73.5 |
| **Al₂O₃** | 19 | 25 |
| **Fe₂O₃** | 0 | 0.4 |
| **TiO₂** | 0 | 0.5 |
| **CaO** | 0 | 2.5 |
| **MgO** | 0 | 0.5 |
| **Na₂O** | 5 | 11 |
| **K₂O** | 2.5 | 10 |
| **BaO** | 0 | 0.3 |

based on the total weight of the nepheline syenite.

Nepheline syenite tailings formed by this process have the following chemical composition:

| | **From/weight %** | **To/weight %** |
|---|---|---|
| **SiO₂** | 31.9 | 70.6 |
| **Al₂O₃** | 15 | 23 |
| **Fe₂O₃** | 0.4 | 13 |
| **TiO₂** | 0 | 3.1 |
| **CaO** | 4.5 | 8.0 |
| **MgO** | 0 | 4.5 |
| **Na₂O** | 4.5 | 7.5 |
| **K₂O** | 5 | 8.5 |
| **BaO** | 0 | 0.5 |

based on the total weight of the nepheline syenite tailings.

"Nepheline" refers to a tectosilicate mineral with a hexagonal-pyramidal crystal structure, with general chemical formula (Na,K)AlSiO₄, belonging to the feldspathoid mineral group (rock-forming mineral chemically and structurally similar to the feldspars, but containing less SiO₂). Nepheline generally occurs in compact granular aggregates of white, yellow, grey or green. Nepheline is typically found in silica-undersaturated igneous rocks such as nepheline syenites.

"Nepheline Black Mix" refers to a mineral mix created as a by-product (one of the nepheline syenite tailings streams) in the processing of nepheline syenite to refined nepheline syenite for industrial applications (e.g. glass and ceramics). Nepheline black mix is the Fe-silicate magnetic tailings from magnetic separation of nepheline syenite, and is composed of the Fe-silicate minerals pyroxene, amphibole and mica, as well as some remaining nepheline.

"CIELAB colour space" refers to colour space defined by the International Commission on Illumination. It expresses colour as three numerical values: L (lightness); a (green-red colour components); and, b (blue-yellow components).

"White" refers to a colour expressed using CIELAB colour space coordinates. White has the parameters: 100 (L), 0 (a), 0 (b).

"Near white" refers to a colour expressed using CIELAB colour space coordinates. Near white has the CIELAB colour space coordinates from 90 to below 100 (L), from -0,5 to +0,5 (a), from 0 to 4 (b).

"LOI" refers to loss on ignition. This measurement is conducted by strongly heating a sample of the mineral at a specified temperature and allowing any volatile substances to escape. This will continue until the mass of the mineral stops changing. The value of LOI represents the mass of moisture and volatile material present in a sample.

"Weight %" refers to the percentage weight in grams of a component of a composition in every 100 grams of a composition. For example, if a mineral composition contains quartz at 25 weight %, then there is 25 g of quartz for every 100 g of the mineral composition.

"Unavoidable impurities" refers to components present in a composition which do not affect the properties of the composition. Unavoidable impurities are present in a composition at: less than 5 weight %; or, less than 4 weight %; or, less than 3 weight %; or, less than 2 weight %; or, less than 1 weight %; or less than 0.5 weight %; or less than 0.1 weight %.

### Synthetic Stone

The (refined) nepheline syenite and/or nepheline syenite tailings according to the different aspects of the invention provide good properties for replacing quartz in the manufacture of synthetic stone. They have wide colorimetric properties from neutral white, to grey and to black and, when mixed with resin, they do not present an important colour deviation from the colour of mixtures of the same resin with high-quality quartz granules.

The refined nepheline syenite and/or nepheline syenite tailings according to the invention have a hardness (around 6.5 in the Mohs scale) similar to quartz, a good resistance to chemical attack by acids and bases and low porosity.

The refined nepheline syenite and/or nepheline syenite tailings is/are crystalline silica free, avoiding the toxicological risks caused by inhalation of respirable crystalline silica during their handling or afterwards, during the machining of the synthetic stone formed therewith, when compared with other feldspars, quartz or cristobalite granules.

These properties, together with the high availability of nepheline in nature, result in the feasibility of replacing quartz granules with the nepheline syenite and/or nepheline syenite tailings of the invention, overcoming the drawbacks encountered until now and without having to modify importantly the current formulations and/or manufacturing processes, and without deteriorating the performance and the visual appearance of these products.

Refined nepheline syenite can be used for white synthetic stones while nepheline syenite tailings are more suited for off-white, grey or black color.

In the present application, the nepheline syenite and/or nepheline syenite tailings may be in the form of "granules". The term "granules" refers to individual units (particles). Thus, the term encompasses units ranging from infinitesimal powder particulates with sizes on the micrometre scale up to comparatively large pellets of material with sizes on the millimetre scale. This term encompasses particulate products of a variety of shapes and sizes, including grain particles, fines, powders, or combinations of these.

The particle size, also called particle diameter, of the granules can be measured by known screening separation using sieves of different mesh size. The term "particle size" as used herein, means the range in which the diameter of the individual particles in the refined nepheline syenite granules and/or nepheline syenite tailings granules falls. It can be measured by particle retention or passage on calibrated sieves that have measured mesh size openings, where a particle will either pass through (and therefore be smaller than) or be retained by (and therefore larger than) a certain sieve whose size openings are measured and known. Particle sizes are defined to be within a certain size range determined by a particle's ability to pass through one sieve with larger mesh openings or "holes" and not pass through a second sieve with smaller mesh openings. For refined nepheline syenite granules and/or nepheline syenite tailings with a particle size < 800 micrometres, the particle size distribution of a granule sample can be measured by laser diffraction with commercially available equipment (e.g. Malvern Panalytical Mastersizer 3000 provided with a Hydro cell). For the measurement, the granule sample might be dispersed in demineralized water assisted by an ultrasound probe. The laser diffractometer provides particle distribution curves (volume of particles vs. particle size) and the D10, D50 and D90 statistical values of the particle population of the sample (particle size values where 10%, 50% or 90% of the sample particle population lies below this value, respectively).

The composition of the granules can be obtained by X-ray fluorescence (XRF), a technique well-established in the mineral technological field. The composition of the granules indicated herein corresponds preferably to the average (calculated from at least 3 repetitions of the measurement) of the composition of samples containing a mass of granules (e.g. 1 gram of granules).

Synthetic stone of the present invention may comprise nepheline syenite with the following chemical composition:

| | **From/weight %** | **To/weight %** |
|---|---|---|
| **SiO₂** | 49.8 | 73.5 |
| **Al₂O₃** | 19 | 25 |
| **Fe₂O₃** | 0 | 0.4 |
| **TiO₂** | 0 | 0.5 |
| **CaO** | 0 | 2.5 |
| **MgO** | 0 | 0.5 |
| **Na₂O** | 5 | 11 |
| **K₂O** | 2.5 | 10 |
| **BaO** | 0 | 0.3 |

based on the total weight of the nepheline syenite. The nepheline syenite may comprise:
Al₂O₃ + Na₂O + K₂O from 32 weight % to 42.5 weight %; and/or,
Al₂O₃ + Na₂O + K₂O + Fe₂O₃ + TiO₂ from 32 weight % to 42 weight %; and/or,
SiO₂/Al₂O₃ from 2.2 to 3.4; and/or
SiO₂ + Al₂O₃ + Na₂O from 88 to 96 weight %; and/or,
SiO₂ + Al₂O₃ + Na₂O + K₂O from 97 to 99 weight %.

Synthetic stone of the present invention may comprise nepheline syenite tailings with the following chemical composition:

| | **From/weight %** | **To/weight %** |
|---|---|---|
| **SiO₂** | 31.9 | 70.6 |
| **Al₂O₃** | 15 | 23 |
| **Fe₂O₃** | 0.4 | 13 |
| **TiO₂** | 0 | 3.1 |
| **CaO** | 4.5 | 8.0 |
| **MgO** | 0 | 4.5 |
| **Na₂O** | 4.5 | 7.5 |
| **K₂O** | 5 | 8.5 |
| **BaO** | 0 | 0.5 |

based on the total weight of the nepheline syenite tailings. The nepheline syenite tailings may comprise:
Al₂O₃ + Na₂O + K₂O from 27 weight % to 36 weight %;
Al₂O₃ + Na₂O + K₂O + Fe₂O₃ + TiO₂ from 36 weight % to 41 weight %; and/or,
SiO₂/Al₂O₃ from 2.3 to 2.8; and/or,
SiO₂ + Al₂O₃ + Na₂O from 69 to 83 weight %; and/or,
SiO₂ + Al₂O₃ + Na₂O + K₂O from 75 to 91 weight %.

Synthetic stone of the present invention may comprise a mixture of (refined) nepheline syenite and nepheline syenite tailings.

The (refined) nepheline syenite and/or nepheline syenite tailings do not contain silica in crystalline form (as quartz or cristobalite), or contain only a minor amount of silica in crystalline form (i.e. less than 1 weight % crystalline silica) such that they are crystalline silica free. The amount of crystalline silica and other crystalline phases in the (refined) nepheline syenite and/or nepheline syenite tailings can be determined by powder X-Ray Diffraction analysis (XRD) using the Rietveld method for quantification, a technique widely used in the field.

The (refined) nepheline syenite and/or nepheline syenite tailings may be in the form of granules.

The refined nepheline syenite granules and/or nepheline syenite tailings granules according to different aspects of the invention can have a particle size in a range of from 1.0 to 0.063 mm (grain particles), or can have a particle size of lower than 63 micrometres (micronized powder). In the case of grain particles, the particle size can range from 0.8 to 0.1 mm, or from 0.7 to 0.3 mm, or from 0.4 to 0.1 mm, or from 0.3 to 0.063 mm.

The refined nepheline syenite granules and/or nepheline syenite tailings granules can be used as micronized powder, with a particle size D90 less than 50 micrometres, optionally less than 40 micrometres, optionally the D90 is from 10 to 40 micrometres.

Suitable nepheline syenite granules and/or nepheline syenite tailings granules include natural rock-forming minerals mined or quarried from their reservoirs and enriched and granulated by known processes, and can be obtained commercially from different sources. The refined nepheline syenite granules and/or nepheline syenite tailings granules according to different aspects of the invention can be subjected to at least one flotation or magnetic separation process to separate accessory minerals, prior to inclusion in a synthetic stone. The refined nepheline syenite granules have preferably been subjected to magnetic separation.

The desired particle size ranges (granulometry) of the refined nepheline syenite granules and/or nepheline syenite tailings granules can be obtained by grinding and sieving the mined or quarried minerals, by methods known in the art, such as grinding with ball mills or opposed grinding rollers or jaw crushers. The grinding may comprise micronizing the mineral(s) to obtain refined nepheline syenite granules and/or nepheline syenite tailings granules with average particle size D90 less than 50 micrometres, optionally less than 40 micrometres, optionally D90 from 10 to 40 micrometres.

The refined nepheline syenite granules and/or nepheline syenite tailings granules can comprise different amounts of accessory minerals mixed with the nepheline, such as mafic minerals like alkali amphibole, alkali pyroxene, mica and alkali feldspar. According to the different aspects of the invention, the nepheline syenite granules do not need to be composed solely of nepheline, and other compounds might be present mixed with the nepheline mineral, as long as the average weight composition of the refined nepheline syenite granules and/or nepheline syenite tailings granules meet the chemical ranges in the claims.

In some aspects, the invention is directed to the use of refined nepheline syenite granules and/or nepheline syenite tailings granules for the manufacture of synthetic stone. This use reduces (potentially to zero) the crystalline silica emissions during manufacturing or mechanizing the synthetic stone, compared to synthetic stone comprising quartz and/or cristobalite. Whilst it is desirable to reduce the crystalline silica component of the claimed synthetic stones to zero, in some aspects the crystalline silica content is higher, such as less than 5 weight %, or less than 10 weight %, or less than 25 weight %, or less than 50 weight %.

Another aspect of the invention relates to a synthetic stone comprising inorganic fillers and a hardened binder, wherein the inorganic fillers comprise the refined nepheline syenite granules and/or nepheline syenite tailings granules of the invention.

The amount of refined nepheline syenite granules and/or nepheline syenite tailings granules in the synthetic stone preferably ranges from 2 to 70 weight%, or from 2 to 50 weight %, or from 2 to 30 weight %, in relation to the total weight of the synthetic stone. In some aspects, the amount of refined nepheline syenite granules and/or nepheline syenite tailings granules in the synthetic stone is at least 2 weight %, or at least 4 weight %, or at least 10 weight %, and/or at most 90 weight %, or at most 70 weight %, or at most 50 weight %, or at most 30 weight %, in relation to the total weight of the synthetic stone.

The synthetic stone can also comprise inorganic fillers different from the refined nepheline syenite granules and/or nepheline syenite tailings granules of the invention, preferably selected from stone, stone-like or ceramic materials. Other inorganic fillers in the synthetic stone may include synthetic inorganic granules such as recycled silicate glass granules, silicate frit granules, ceramic granules, or mixtures thereof. Optionally, the inorganic fillers (i.e. the sum of the weights of the refined nepheline syenite granules and/or nepheline syenite tailings granules and of the other inorganic fillers) account for at least 70 weight %, or at least 80 weight %, or at least 85 weight %, and at most 95 weight %, of the total weight of the synthetic stone.

Synthetic stone with a low crystalline silica content is preferred. Therefore, it is preferred that all, or at least 90 weight %, or at least 95 weight % or at least 99 weight %, of the inorganic fillers have a low crystalline silica content, preferably a crystalline silica (quartz, cristobalite or other crystalline polymorphs) content of from 0 to 15 weight %, or from 0 to 10 weight %, or from 0 to 7 weight %, relative to the weight of said inorganic fillers. Preferably, at least 95 weight %, more preferably at least 99 weight %, of the other inorganic fillers in the synthetic stone have a crystalline silica content of from 0 to 10 weight %, relative to the weight of said inorganic fillers.

In some aspects, the synthetic stone does not comprise greater than 5 weight %, or greater than 1 weight %, relative to the weight of the synthetic stone material, of inorganic fillers with a crystalline silica content of greater than 15 weight %, or greater than 10 weight %, relative to the weight of said inorganic fillers. It is preferred that the synthetic stone comprises from 0 to 5 weight % relative to the weight of the synthetic stone, of inorganic fillers with a content of crystalline silica of from 15 to 100 weight % relative to the weight of the inorganic fillers.

In some aspects, the synthetic stone does not comprise inorganic granules with a content of crystalline silica greater than 15 weight %, or greater than 10 weight %. In these aspects, in addition to the refined nepheline syenite granules and/or nepheline syenite tailings granules according to the claims, the synthetic stone further comprises synthetic inorganic granules selected from recycled silicate glass granules, silicate frit granules, ceramic granules, or mixtures thereof. In some aspects, the synthetic stone comprises refined nepheline syenite granules and/or nepheline syenite tailings granules according to the invention, and silicate glass granules (recycled, frit) with less than 1 weight % crystalline silica, preferably wherein the sum of the weights of refined nepheline syenite granules and/or nepheline syenite tailings granules and silicate glass granules accounts for more than 50 weight %, or more than 70 weight %, or more than 90 weight %, of the weight of the synthetic stone.

In some aspects, the crystalline silica content of the synthetic stone material is less than or equal to 15 weight %, or less than or equal to 10 weight %, or less than or equal to 5 weight %, relative to the weight of the synthetic stone. The crystalline silica content of the synthetic stone material may be from 0 to 15 weight %, or from 0 to 10 weight %, or from 0 to 5 weight %, relative to the weight of the synthetic stone.

In some aspects, the refined nepheline syenite granules and/or nepheline syenite tailings granules comprised in the synthetic stone have a particle size D90 less than 50 micrometres, or less than 40 micrometres, or a D90 from 10 to 40 micrometres.

Optionally, the synthetic stone of the invention might incorporate the refined nepheline syenite granules and/or nepheline syenite tailings granules exclusively with a particle size less than 0.1 mm. In some cases, the amount of refined nepheline syenite granules and/or nepheline syenite tailings granules in the synthetic stone with a particle size less than 0.063 mm is from 10 weight % to 40 weight %, in relation to the total weight of the synthetic stone.

The weight of inorganic filler (sum of the weights of the refined nepheline syenite granules and/or nepheline syenite tailings granules and/or of any other inorganic granules) in the artificial stone article is optionally from 70 to 95 weight %, optionally from 85 to 95 weight % in relation to the weight of the synthetic stone.

The hardenable binder is optionally a hardenable organic resin, more preferably an organic thermosetting resin, suitably liquid and which may be selected from the group made up of unsaturated polyester resins, methacrylate based resins, vinyl resins and epoxy resins. These hardenable organic resins are preferably reactive and can be hardened in a curing (or cross-linking) reaction.

According to some aspects, the synthetic stone has been obtained by vacuum vibrocompaction and has an apparent density in the range of from 2000 to 2600 kg/m³, or from 2100 to 2500 kg/m³. Apparent density of the synthetic stone can be measured according to EN 14617-1:2013, or any other method known in the art.

The synthetic stone may be in the form of a block, slab, tile, sheet, board or plate. The synthetic stone might be used for construction or decoration, for manufacturing counters, kitchen countertops, sinks, shower trays, walls or floor coverings, stairs or similar.

The invention is also concerned with a method of forming a synthetic stone of the invention, comprising:
a) mixing a hardenable binder and an inorganic filler comprising nepheline syenite, nepheline syenite tailings, or nepheline syenite and nepheline syenite tailings,
b) vacuum vibrocompacting the unhardened mixture obtained in a) in a mould, and
c) hardening the compacted mixture obtained in b).

For the manufacture of the synthetic stone, a hardenable binder, such as a liquid organic resin, is mixed with the refined nepheline syenite granules and/or nepheline syenite tailings granules, and with any optional inorganic fillers different from the refined nepheline syenite granules and/or nepheline syenite tailings granules forming an (unhardened) synthetic stone mixture. The amount of refined nepheline syenite granules and/or nepheline syenite tailings granules is optionally from 1 to 90 weight %, or from 1 to 70 weight %, or from 1 to 50 weight %, or from 1 to 30 weight %, of the weight of the synthetic stone mixture. The amount of refined nepheline syenite granules and/or nepheline syenite tailings granules in the synthetic stone mixture is at least 2 weight %, or at least 4 weight %, or at least 10 weight %, and/or at most 90 weight %, or at most 70 weight %, or at most 50 weight %, or at most 30 weight %, in relation to the weight of the synthetic stone. The sum of the weights of the refined nepheline syenite granules and/or the nepheline syenite tailings granules and/or the optional inorganic fillers (different than the refined nepheline syenite granules and/or nepheline syenite tailings granules) is optionally at least 70 weight %, or at least 80 weight %, or at least 85 weight %, of the weight of the synthetic stone mixture. Optionally, the amount of hardenable binder in the synthetic stone mixture ranges from 5 to 30 weight %, or from 5 to 15 weight %.

The mixing can be achieved, for example, by stirring with the use of conventional mixers, in a manner known in the art. The hardenable binder might be an organic resin, which once hardened, serves to achieve cohesion and adherence between the inorganic fillers in the synthetic stone mixture. The organic resins are preferably thermosetting, liquid and can be selected, for example, from the group made up of unsaturated polyester resins, methacrylate-based resins, vinyl resins and epoxy resins. These resins are preferably reactive and harden in a curing or cross-linking reaction.

Additionally, additives can be included in this mixing step, selected from pigments, curing catalysts, curing accelerators, UV stabilizers, or mixtures thereof. The optional inorganic fillers (different from the refined nepheline syenite granules and/or nepheline syenite tailings granules) might be selected from stone, stone-like or ceramic materials, recycled silicate glass granules, silicate frit granules, ceramic granules, or mixtures thereof. These fillers may be incorporated to the synthetic stone mixture with different particle sizes and can be obtained from the crushing and/or grinding of natural or artificial materials. These inorganic fillers can be sourced, for example, from specialized companies, which commercialize them already dry and classified according to their particle size.

The other inorganic fillers (different from the refined nepheline syenite granules and/or nepheline syenite tailings granules) can be in the form of granules, preferably with a particle size in a range of from 2.0 to 0.063 mm (grain particles) or with a particle size lower than 63 micrometres (micronized powder). In the case of grain particles of inorganic fillers, the particle size might range from 1.2 to 0.1 mm, or from 0.7 to 0.3 mm, or from 0.4 to 0.1 mm, or from 0.3 to 0.063 mm. The inorganic fillers (different from the refined nepheline syenite granules and/or nepheline syenite tailings granules) are preferably selected from recycled silicate glass granules, silicate frit granules, ceramic granules, or mixtures thereof. The inorganic fillers (different from the refined nepheline syenite granules and/or nepheline syenite tailings granules) may have a composition of oxides different to the composition of the refined nepheline syenite granules and/or nepheline syenite tailings granules of the invention.

The unhardened synthetic stone mixture may comprise other additives, such as colorants or pigments, accelerators or catalysers for the curing or hardening of the resin (e.g. free radical initiators), promoters for the adhesion between the filler and the resin (e.g. silanes). These types of additives and the proportion used thereof are known in the state of the art. Optionally, these additives may be present in the synthetic stone mixture in an amount of from 0.01 to 5.0 wt.%, based on the weight of the mixture.

The unhardened synthetic stone mixture may be transported to a distributor in a distribution device. Distribution devices suitable are known, such as those used for the distribution of the (unhardened) synthetic stone mixtures in the manufacture of quartz containing synthetic stone. This (unhardened) synthetic stone mixture is optionally movable along the length of a temporary mould. The mould, in its simplest form, might be embodied by a paper or plastic sheet. Alternatively, the mould might be a more complex elastomeric tray. The distribution device may include a feeding hopper that receives the mixture in the top opening thereof and a conveyor belt positioned below the bottom outlet opening of the hopper, which collects or extracts the mixture from the hopper and deposits it onto or into a mould (depending on whether the mould is configured as a sheet or a tray). Other distribution devices and moulds are possible within the general concept of the present disclosure.

The unhardened synthetic stone mixture having been distributed in the mould can be covered with a protective sheet on its top surface and subjected to vacuum vibrocompaction. For this, in an example, the mixture is transported inside a compaction area of a press, wherein it is inserted in a sealable chamber. Then, the chamber is sealed, and vacuum is created with appropriate gas evacuation pumps. Once the desired vacuum level has been reached (e.g. from 5 to 40 mbar), the ram of the press exerts a compaction pressure simultaneously with the application of vertical vibration of the piston (e.g. oscillating at from 2.000 to 4.000 Hz). During the vacuum vibrocompaction, the air entrapped in the synthetic stone mixture is substantially evacuated.

The compacted mixture then goes to a hardening or curing stage. In this stage, depending on the type of resin, as well as the use or not of any suitable catalysts or accelerants, the mixture is suitably subjected to the effect of temperature in a curing oven, suitably heated at a temperature between from 80 to 120°C, with residence times in the oven generally varying from 20 to 60 minutes. After curing, the hardened compacted mixture is cooled to a temperature equal to or less than 40°C.

After hardening, the hardened synthetic stone obtained, which can be shaped as blocks, slabs, boards or plates, can be cut and/or calibrated to the desired final dimensions, and may be finished (polished or honed) on one or both of its larger surfaces, depending on the intended application.

The present disclosure includes all the possible combinations of embodiments and aspects disclosed herein.

### Experimental

### Definitions and testing methods:

XRF: Oxide analysis of the granules might be conducted by X-Ray Fluorescence in a commercial XRF spectrometer.

For example, a disc of about 1 g of a sample is mixed with lithium tetraborate and calcined in air, at atmospheric pressure and at a temperature 1,050°C for 25 minutes prior to analysis in the spectrometer. The results are reported as relative weight percentage of oxides (SiO₂, Al₂O₃, etc. as included in the tables) in the fired chemical composition, i.e. without any "loss on ignition" components (such as volatiles, or organic matter which evaporate or decompose during calcination). The spectrometer is previously calibrated with multipoint calibration curves of known concentration of standards. The international standard ISO 12677:2011 may be followed for XRF analysis.

XRD: Identification and quantification of crystalline phases in the granules can be done by powder X-Ray Diffraction (XRD) using MoKα1 radiation (0.7093Å) with a commercially available device (e.g. Bruker D8 Advance) at from 2°C to 35°C for 4 hours. Once the X-ray diffraction data is obtained, it is analyzed using the Rietveld method for quantification. The content of crystalline silica phases is calculated as a weight percentage of the sample analysed. Most commercially available XRD devices are accurate to approximately 1 weight % of a crystal phase, although some XRD devices can be more accurate.

Granulometry: The particle size, also called particle diameter, of the granules can be measured by known screening separation using sieves of different mesh sizes. For nepheline syenite granules with a particle size less than 200 micrometres, the particle size distribution can be measured by laser diffraction with a commercial equipment (e.g. Malvern Panalytical Mastersizer 3000 provided with a Hydro cell). For the measurement the granule sample can be dispersed in demineralized water assisted by an ultrasound probe. The laser diffractometer provides particle distribution curves (volume of particles vs. particle size) and the D10, D50 and D90 statistical values of the particle population (particle size values where 10%, 50% or 90% of the sample particle population lies below this value, respectively).

Colorimetry: Colorimetry and transparency of the granules in a polymerized matrix can be measured from disks prepared by mixing 50 g of the granules with 50 g of a commercial unsaturated polyester resin catalyzed with 0.75 g of organic MEKP peroxide and 0.12 g of cobalt octoate (6% cobalt). After homogenization, the mixture is poured to an aluminium mould up to a thickness of 5 mm. The mixture is then hardened at 70°C for 20 minutes and allowed to reach room temperature afterwards for from 30 to 40 minutes. The aluminium mould is then removed before the colorimetry and transparency of the obtained disk is measured. The colorimetry may be measured in a commercially available spectrophotometer (e.g. Konica Minolta CM-3600d) and expressed in values of L* a* b* coordinates (CIELAB color space), where L* is lightness from black (0) to white (100), a* from green (-) to red (+) and b* from blue (-) to yellow (+).

### Examples according to the invention

Nine different samples of refined nepheline syenite granules, and four different samples of nepheline syenite tailings in granular form, were collected from different suppliers specialized in the prospection, extraction, separation and enrichment of the nepheline mineral mined from different natural reservoirs in Canada, China, Brazil, Turkey and Norway.

For the experiments, the nepheline syenite granules and/or nepheline syenite tailings granules were micronized to a particle size D90 from 18 to 40 micrometres.

Tables 1, 2 and 3 show the results from XRF oxide analysis of the nepheline syenite tailings granules, and nepheline syenite granules, subjected to evaluation, averaged from 3 repetitions (in each case). Tables 1, 2 and 3 also shows other correlations between the chemical parameters like the ration SiO₂/Al₂O₃ and the sum of SiO₂, Al₂O₃ and Na₂O.

**Table 1: Chemical composition of Nepheline Syenite Tailings 1, 2, 3 and 4**

| **Chemical/weight %** | **Nepheline Syenite Tailings 1** | **Nepheline Syenite Tailings 2** | **Nepheline Syenite Tailings 3** | **Nepheline Syenite Tailings 4** |
|---|---|---|---|---|
| SiO₂ | 47.41 | 54.45 | 53.06 | 51.46 |
| Al₂O₃ | 17.00 | 21.34 | 20.66 | 21.94 |
| Fe₂O₃ | 10.24 | 0.48 | 1.32 | 4.01 |
| TiO₂ | 3.00 | 0.98 | 1.40 | 1.12 |
| CaO | 6.65 | 6.72 | 7.76 | 4.90 |
| MgO | 4.14 | 0.23 | 0.64 | 1.28 |
| Na₂O | 5.31 | 7.24 | 7.02 | 7.39 |
| K₂O | 6.00 | 8.21 | 7.81 | 7.58 |
| BaO | 0.25 | 0.35 | 0.33 | 0.32 |
| Al₂O₃+Na₂O+K₂O | 28.3 | 36.8 | 35.5 | 36.9 |
| Al₂O₃+Na₂O+K₂O+Fe₂O₃+TiO₂ | 41.5 | 38.3 | 38.2 | 42.1 |
| SiO₂/Al₂O₃ | 2.8 | 2.5 | 2.6 | 2.3 |
| SiO₂+Al₂O₃+Na₂O | 69.7 | 83.0 | 80.7 | 80.8 |
| SiO₂+Al₂O₃+Na₂O+K₂O | 75.7 | 91.2 | 88.6 | 88.4 |

**Table 2: Chemical composition of Nepheline Syenite 1, 2, 3 and 4**

| **Chemical/weight %** | **Nepheline Syenite 1** | **Nepheline Syenite 2** | **Nepheline Syenite 3** | **Nepheline Syenite 4** |
|---|---|---|---|---|
| SiO₂ | 60.43 | 56.08 | 65.74 | 64.32 |
| Al₂O₃ | 23.20 | 24.72 | 19.64 | 19.81 |
| Fe₂O₃ | 0.10 | 0.14 | 0.04 | 0.04 |
| TiO₂ | 0.00 | 0.12 | 0.14 | 0.19 |
| CaO | 0.38 | 1.64 | 1.24 | 1.32 |
| MgO | 0.00 | 0.00 | 0.00 | 0.00 |
| Na₂O | 10.48 | 8.15 | 6.65 | 5.57 |
| K₂O | 5.41 | 8.95 | 6.55 | 8.75 |
| BaO | 0.00 | 0.20 | 0.00 | 0.00 |
| Al₂O₃+Na₂O+K₂O | 39.1 | 41.8 | 32.8 | 34.1 |
| Al₂O₃+Na₂O+K₂O+Fe₂O₃+TiO₂ | 39.2 | 42.1 | 33.0 | 34.4 |
| SiO₂/Al₂O₃ | 2.6 | 2.3 | 3.3 | 3.2 |
| SiO₂+Al₂O₃+Na₂O | 94.1 | 88.9 | 92.0 | 89.7 |
| SiO₂+Al₂O₃+Na₂O+K₂O | 99.5 | 97.9 | 98.6 | 98.4 |

**Table 3: Chemical composition of Nepheline Syenite 5, 6, 7, 8 and 9**

| **Chemical/weight %** | **Nepheline Syenite 5** | **Nepheline Syenite 6** | **Nepheline Syenite 7** | **Nepheline Syenite 8** | **Nepheline Syenite 9** |
|---|---|---|---|---|---|
| SiO₂ | 65.62 | 63.39 | 65.27 | 62.82 | 59.09 |
| Al₂O₃ | 20.04 | 21.17 | 20.19 | 21.95 | 23.49 |
| Fe₂O₃ | 0.02 | 0.03 | 0.03 | 0.02 | 0.01 |
| TiO₂ | 0.21 | 0.24 | 0.31 | 0.17 | 0.28 |
| CaO | 1.41 | 1.96 | 1.26 | 1.22 | 1.27 |
| MgO | 0.00 | 0.00 | 0.01 | 0.00 | 0.00 |
| Na₂O | 9.96 | 10.02 | 9.92 | 10.13 | 9.85 |
| K₂O | 2.74 | 3.19 | 2.99 | 3.69 | 6.01 |
| BaO | 0.00 | 0.00 | 0.00 | 0.00 | 0.00 |
| Al₂O₃+Na₂O+K₂O | 32.7 | 34.4 | 33.1 | 35.8 | 39.4 |
| Al₂O₃+Na₂O+K₂O+Fe₂O₃+TiO₂ | 33.0 | 34.7 | 33.4 | 36.0 | 39.6 |
| SiO₂/Al₂O₃ | 3.3 | 3.0 | 3.2 | 2.9 | 2.5 |
| SiO₂+Al₂O₃+Na₂O | 95.6 | 94.6 | 95.4 | 94.9 | 92.4 |
| SiO₂+Al₂O₃+Na₂O+K₂O | 98.4 | 97.8 | 98.4 | 98.6 | 98.4 |

To determine the colorimetric properties of the nepheline syenite granules and nepheline syenite tailings granules from Tables 1, 2 and 3, 12 g of each sample was placed into separate small beakers and 8 g of epoxy resin (Fugante^{™} Epoxy 2k) added to each beaker. The mixtures were mixed in a Speed Mixer by HausChild for 60 seconds at 3000 rpm. The mixtures were then each poured into separate alumina cups for hardening. To harden the samples, they were left for 24 hours at a temperature of 35°C and at atmospheric pressure. The colorimetric properties were measured once the samples had hardened.

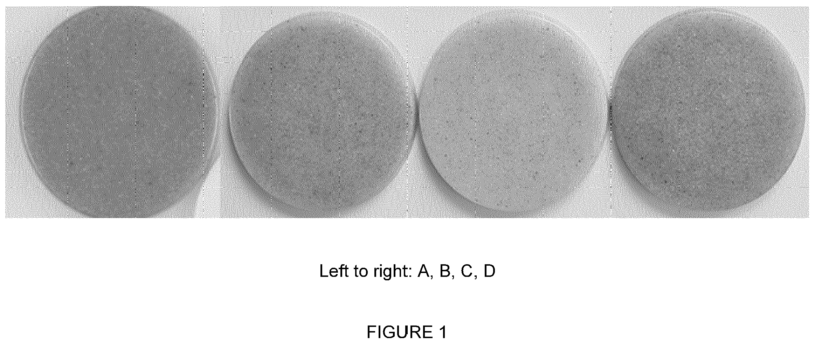

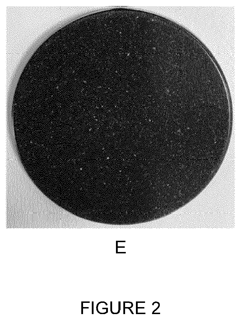

Figures 1 and 2 include pictures of hardened samples as follows:
- Figure 1:: A = Nepheline Syenite 2
B = Nepheline Syenite 3
C = Nepheline Syenite 5
D = Nepheline Syenite 4
- Figure 2:: E = Nepheline Syenite Tailings 1
Not all the hardened mixtures which were prepared we pictured, for brevity.

**Table 4: Colorimetric properties of hardened samples (Nepheline Syenites)**

| | **Colour** | | | |
|---|---|---|---|---|
| | **L*** | **a*** | **b*** | **Quartz Content** |
| **Nepheline Syenite 1** | 62.6 | 0.1 | 4.5 | 0 |
| **Nepheline Syenite 2** | 52.2 | 1.6 | 6.6 | 0 |
| **Nepheline Syenite 3** | 55 | 0.8 | 5.3 | 0 |
| **Nepheline Syenite 4** | 58 | 1.3 | 6.8 | 0 |
| **Nepheline Syenite 5** | 52 | 0.3 | 7.5 | 0 |
| **Nepheline Syenite 6** | 56 | 0.8 | 8.2 | 0 |
| **Nepheline Syenite 7** | 45 | 2.2 | 9.1 | 0 |
| **Nepheline Syenite 8** | 59 | 0.1 | 5.3 | 0 |
| **Nepheline Syenite 9** | 55 | 1.2 | 9.2 | 0 |

**Table 5: Colorimetric properties of hardened samples (Nepheline Syenite Tailings)**

| | **Colour** | | | |
|---|---|---|---|---|
| | **L*** | **a*** | **b*** | **Quartz Content** |
| **Nepheline Syenite Tailings 1** | 29 | -0.03 | 0.03 | 0 |
| **Nepheline Syenite Tailings 2** | 31 | 2 | 2.3 | 0 |
| **Nepheline Syenite Tailings 3** | 38 | 1 | 1.2 | 0 |
| **Nepheline Syenite Tailings 4** | 44 | 1.1 | 1.3 | 0 |

The colorimetric results show that the nepheline samples have a good brightness with a reduced yellow component and red component. This surprisingly makes nepheline syenite and nepheline syenite tailings useful for off-white synthetic stone production and also for white synthetic stone production, especially in the dirty-white types of synthetic stone mostly used in the furniture market.

For the nepheline syenite tailings, the color obtained is almost a pure neutral black for the tailings 1 and 2, while the colour obtained goes to a pure grey for the tailings 3 and 4. This surprisingly makes nepheline syenite tailings useful for the production of darker coloured synthetic stone also called off-white colour. Such nepheline syenite tailings would otherwise be sent to landfill or used as an additive for soil.

For all the samples of nepheline syenite and nepheline syenite tailings (as detailed in the tables 1, 2 and 3) there is no trace of crystalline silica in the samples, within the measurement error of the XRD device which was approximately 1 weight % of a crystal phase. This makes the example samples particularly useful in the preparation of synthetic stone where at least one aim is to reduce the amount of crystalline silica present (optionally to zero or nearly zero).

In these non-limiting examples, the resin combined with the nepheline syenite and/or nepheline syenite tailings is Fugante^{™} Epoxy 2k, which is an epoxy resin. Alternatively, the resin can be other epoxy resins, or a polyester resin, or a polyurethane resin. Non-limiting examples of polyester resins include AROPOL^{™} LP 67400 (produced by INEOS^{™}), orthophthalic (produced by Ashland^{™}), dicyclopentadiene (produced by Ashland^{™}), isophthalic (produced by Ashland^{™}) and POLARIS (produced by Ashland^{™}). Non-limiting examples of polyurethane resins include URETAN NR (produced by Cores^{™}) or PUCORE NG (produced by Cores^{™}). When forming a synthetic stone (for use in or as, for example, a kitchen countertop, facades, bathrooms or furniture) with mineral filler and resin, typically the amount of mineral filler is from 80 to 92 weight % and the amount of resin (optionally of the types listed previously) is from 8 to 20 weight %.

### Conclusion

The present inventors have demonstrated that nepheline syenite, nepheline syenite tailings, or nepheline syenite and nepheline syenite tailings (combined) can be combined with a binder to form a synthetic stone. A synthetic stone formed with these components has similar physical characteristics to a synthetic stone formed from quartz and/or cristobalite combined with a binder, without the drawback that machining the synthetic stone can lead to the formation of potentially hazardous dust. Additionally, the inclusion of nepheline syenite, nepheline syenite tailings, or nepheline syenite and nepheline syenite tailings (combined) provides manufacturers of synthetic stone with more options for the colours of the synthetic stone, opening up the possibility of including black and/or grey colours into synthetic stone.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A synthetic stone comprising:
a. nepheline syenite, and
a binder; or,
b. nepheline syenite tailings, and
a binder; or,
c. nepheline syenite and nepheline syenite tailings, and
a binder.

2. The synthetic stone of claim 1, wherein the nepheline syenite has the following chemical composition:
| | **From/weight %** | **To/weight %** |
|---|---|---|
| **SiO₂** | 49.8 | 73.5 |
| **Al₂O₃** | 19 | 25 |
| **Fe₂O₃** | 0 | 0.4 |
| **TiO₂** | 0 | 0.5 |
| **CaO** | 0 | 2.5 |
| **MgO** | 0 | 0.5 |
| **Na₂O** | 5 | 11 |
| **K₂O** | 2.5 | 10 |
| **BaO** | 0 | 0.3 |
based on the total weight of the nepheline syenite.

3. The synthetic stone of claim 1 or claim 2, wherein the nepheline syenite comprises:
Al₂O₃ + Na₂O + K₂O from 32 weight % to 42.5 weight %; and/or,
Al₂O₃ + Na₂O + K₂O + Fe₂O₃ + TiO₂ from 32 weight % to 42 weight %; and/or,
SiO₂/Al₂O₃ from 2.2 to 3.4.

4. The synthetic stone of any one of claims 1 to 3, wherein the nepheline syenite has the following chemical composition:
| | **From/weight %** | **To/weight %** |
|---|---|---|
| **SiO₂** | 50.85 | 65.29 |
| **Al₂O₃** | 22 | 25 |
| **Fe₂O₃** | 0.01 | 0.2 |
| **TiO₂** | 0 | 0.15 |
| **CaO** | 0.2 | 2 |
| **MgO** | 0 | 0.5 |
| **Na₂O** | 7.5 | 11 |
| **K₂O** | 5 | 10 |
| **BaO** | 0 | 0.3 |
based on the total weight of the nepheline syenite.

5. The synthetic stone of any one of claims 1 to 4, wherein the nepheline syenite tailings have the following chemical composition:
| | **From/weight %** | **To/weight %** |
|---|---|---|
| **SiO₂** | 31.9 | 70.6 |
| **Al₂O₃** | 15 | 23 |
| **Fe₂O₃** | 0.4 | 13 |
| **TiO₂** | 0 | 3.1 |
| **CaO** | 4.5 | 8.0 |
| **MgO** | 0 | 4.5 |
| **Na₂O** | 4.5 | 7.5 |
| **K₂O** | 5 | 8.5 |
| **BaO** | 0 | 0.5 |
based on the total weight of the nepheline syenite tailings.

6. The synthetic stone of any one of claims 1 to 5, wherein the nepheline syenite tailings comprise:
Al₂O₃ + Na₂O + K₂O from 27 weight % to 36 weight %;
Al₂O₃ + Na₂O + K₂O + Fe₂O₃ + TiO₂ from 36 weight % to 41 weight %; and/or,
SiO₂/Al₂O₃ from 2.3 to 2.8.

7. The synthetic stone of any one of claims 1 to 6, wherein the nepheline syenite tailings have the following chemical composition:
| | **From/weight %** | **To/weight %** |
|---|---|---|
| **SiO₂** | 33.9 | 57.4 |
| **Al₂O₃** | 15 | 22 |
| **Fe₂O**₃ | 8 | 13 |
| **TiO₂** | 2 | 3.1 |
| **CaO** | 5 | 7.5 |
| **MgO** | 3 | 4.5 |
| **Na₂O** | 4.5 | 7.5 |
| **K₂O** | 5 | 8 |
| **BaO** | 0.1 | 0.5 |
based on the total weight of the nepheline syenite tailings.

8. The synthetic stone of any one of claims 1 to 7, wherein the synthetic stone comprises:
from 1 to 90 weight %, or from 1 to 70 weight %, or from 1 to 40 weight %, or from 1 to 30 weight%, nepheline syenite, nepheline syenite tailings, or nepheline syenite and nepheline syenite tailings; or,
from 2 to 90 weight %, or from 2 to 70 weight %, or from 2 to 40 weight %, or from 2 to 30 weight%, nepheline syenite, nepheline syenite tailings, or nepheline syenite and nepheline syenite tailings; or,
from 5 to 90 weight %, or from 5 to 70 weight %, or from 5 to 40 weight %, or from 5 to 30 weight%, nepheline syenite, nepheline syenite tailings, or nepheline syenite and nepheline syenite tailings.

9. The synthetic stone of any one of claims 1 to 8, wherein the nepheline syenite, nepheline syenite tailings, or nepheline syenite and nepheline syenite tailings, are in the form of granules; optionally, wherein the granules:
have a particle size in a range of from 1.0 to 0.063 mm (grain particles), or
have a particle size of lower than 63 micrometres (micronized powder); and/or,
have a particle size D90 less than 50 micrometres, or less than 40 micrometres, or from 10 to 40 micrometres.

10. The synthetic stone of any one of claims 1 to 9, wherein the binder comprises, or consists of, a resin; optionally, wherein the synthetic stone comprises from 6 to 20 weight % resin; optionally,
wherein the resin is an epoxy resin, a polyester resin or a polyurethane resin; optionally, wherein the resin is a 2K epoxy resin.

11. The synthetic stone of any one of claims 1 to 10, wherein the ratio of nepheline syenite to nepheline syenite tailings is (nepheline syenite:nepheline syenite tailings):
from 1:100 to 100:1; or,
from 1:10 to 10:1; or,
from 1:5 to 5:1; or,
from 1:2 to 2:1; or,
1:1.

12. The synthetic stone of any one of claims 1 to 11, wherein the synthetic stone further comprises a pigment, a silane, a catalyst, an accelerator, or a mixture of any two, three or four of these components

13. The synthetic stone of any one of claims 1 to 12, wherein the synthetic stone comprises:
less than 1 weight % crystalline SiO₂, or less than 0.5 weight % crystalline SiO₂, or less than 0.1 weight % crystalline SiO₂, or is free of crystalline SiO₂; and/or,
cristobalite, quartz, or cristobalite and quartz, at less than 1 weight %, or less than 0.5 weight %, or less than 0.1 weight %, or less than 0.01 weight %; and/or,
trace amounts (less than 1 weight %, or less than 0.5 weight %, or less than 0.01 weight %) of wollastonite, diopside, calcium magnesium silicate, mica and/or titanite.

14. A paint composition; or, an ink composition; or, a filtration medium; or, a ceramic composition; or, a dental composition; or, a biomedical composition; or, an implant material; or, a fuel cell; or a nuclear waste immobilization composition; comprising the synthetic stone of any one of claims 1 to 13.

15. A method of forming a synthetic stone, optionally as in any one of claims 1 to 13, comprising the following steps:
providing nepheline syenite, nepheline syenite tailings, or nepheline syenite and nepheline syenite tailings,
mixing the nepheline syenite, nepheline syenite tailings, or nepheline syenite and nepheline syenite tailings with a binder, and,
permitting the mixture to harden to form a synthetic stone; optionally,
wherein the method further comprises:
during the mixing step, adding a pigment to obtain a synthetic stone of a desired colour; and/or,
during the mixing step, adding one or more components selected from the list consisting of a pigment, a silane, a catalyst, an accelerator, or a mixture of any two, three or four of these components; and/or,
wherein:
the nepheline syenite, nepheline syenite tailings, or nepheline syenite and nepheline syenite tailings are according to any one of claims 2 to 9, or 11; and/or,
the binder is according to claim 10.
